(19) Europäisches Patentamt
European Patent Office
Office européen des brevets

(11) **EP 1 090 078 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **99926334.6**

(22) Anmeldetag: **19.05.1999**

(51) Int Cl.⁷: **C09D 5/00**, C09D 201/00

(86) Internationale Anmeldenummer:
**PCT/EP1999/003443**

(87) Internationale Veröffentlichungsnummer:
**WO 1999/060064 (25.11.1999 Gazette 1999/47)**

(54) **WÄSSRIGE ZUBEREITUNGEN**

AQUEOUS PREPARATIONS

PREPARATIONS AQUEUSES

(84) Benannte Vertragsstaaten:
**DE ES FR IT NL**

(30) Priorität: **20.05.1998 DE 19822790**

(43) Veröffentlichungstag der Anmeldung:
**11.04.2001 Patentblatt 2001/15**

(73) Patentinhaber: **BASF AKTIENGESELLSCHAFT
67056 Ludwigshafen (DE)**

(72) Erfinder:
- **ZHAO, Cheng-Le
D-68723 Schwetzingen (DE)**
- **DITTRICH, Uwe
D-67061 Ludwigshafen (DE)**
- **ROSER, Joachim
B-1180 Brüssel (BE)**
- **PAKUSCH, Joachim
D-67346 Speyer (DE)**
- **RÖCKEL, Harald
D-67435 Neustadt (DE)**

(74) Vertreter: **Kinzebach, Werner, Dr. et al
Ludwigsplatz 4
67059 Ludwigshafen (DE)**

(56) Entgegenhaltungen:
- **DATABASE WPI ON QUESTEL, Woche 9705, London: Derwent Publications Ltd., AN 97-048328, Klasse A14, XP002900665 & JP 08 301907 A (ASAHI KASEI KOGYO KK), Zusammenfassung.**
- **DATABASE WPI ON QUESTEL, Woche 8829, London: Derwent Publications Ltd., AN 88-200270, Klasse A89, XP002900666 & JP 63 135935 A (KONISHIROKU PHOTO IND CO LTD), Zusammenfassung.**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft wässrige Zubereitungen, die wenigstens zwei voneinander verschiedene, teilchenförmige Polymere P1 und P2 als wässrige Dispersionen enthalten.

Wässrige Zubereitungen auf der Basis von wässrigen Polymerisatdispersionen finden aufgrund der filmbildenden Eigenschaften der in ihnen enthaltenen Polymere vielfältige Verwendung, beispielsweise als Bindemittel in pigmenthaltigen Zubereitungen, wie Dispersionsfarben, Dichtungsmassen, Beschichtungsmassen oder Asphaltmassen, in pigmentfreien Zubereitungen wie Klarlacken und Polituren, als Klebstoffe und Klebrohstoffe sowie in Beschichtungmitteln für Papier, Fasern oder Leder.

Zubereitungen auf der Basis wässriger Polymerisatdispersionen enthalten zur Einstellung der Eigenschaften der beim Trocknen der Polymerisatdispersionen resultierenden Polymerfilme häufig zwei verschiedene Polymere.

Aus der US 5,208,285 ist bekannt, die Nasshaftung von Polymerfilmen auf der Basis von Polyvinylacetat-Dispersionen durch Zugabe geringer Mengen einer Polymerisatdispersion zu verbesseren, deren Polymer cyclische Harnstoffgruppen aufweist.

Die EP-A 716 131 beschreibt pigmenthaltige Beschichtungsmassen, die eine sehr feinteilige Polymerisatdispersion und eine grobteiligere Polymerisatdispersion als Bindemittel enthalten. Durch die Kombination der feinteiligen und der grobteiligeren Dispersion wird der Glanz der Beschichtungen verbessert.

Die EP-A 466 409 beschreibt einen Blend aus zwei wässrigen Polymerisatdisperionen, deren Polymere sich hinsichtlich ihrer Glasübergangstemperaturen unterscheiden. Durch die Kombination eines Polymers mit einer Glasübergangstemperatur > 20 °C und eines Polymers mit einer Glasübergangstemperatur < 20 °C wird eine verbesserte Filmbildung bei gleichzeitig hoher Blockfestigkeit der erhaltenen Beschichtungen bewirkt.

Für die Herstellung von wässrigen Polymerisatdispersionen als auch für deren Weiterverarbeitung zu entsprechenden wässrigen Zubereitungen ist eine geringe Viskosität der Polymerisatdispersionen von Vorteil. Die gebrauchsfertigen wässrigen Zubereitungen auf der Basis wässriger Polymerisatdispersionen müssen jedoch häufig eine Viskosität aufweisen, die deutlich oberhalb der Eigenviskosität der in den Zubereitungen enthaltenen wässrigen Polymerisatdispersionen liegt.

Die Einstellung der Viskosität wässriger Zubereitungen erfolgt in der Regel durch Zugabe eines Verdickungsmittels. Hierunter versteht man hochmolekulare Stoffe, meist organische Polymere, die in der zu verdickenden Flüssigkeit quellen und dabei in zähfließende, kolloidale oder echte Lösungen übergehen (siehe Römpp, Chemielexikon, 9. Auflage, Thieme Verlag, Stuttgart, S. 4488). Verdickungsmittel für wässrige Lösungsmittel weisen polare funktionelle Gruppen, z.B. OH-, COOH oder Carboxamidgruppen auf, die mit den Wassermolekülen Wasserstoffbrückenbindungen bilden und auf diese Weise eine Verdickung bewirken.

Die aus dem Stand der Technik bekannten wässrigen Zubereitungen auf der Basis wässriger Polymerisatdispersionen benötigen zur Einstellung einer geeigneten Verarbeitungsviskosität stets größere Mengen an Verdickungsmitteln. Ein Einsatz größerer Mengen an Verdickungsmitteln in wässrigen Zubereitungen auf der Basis von Polymerisatdispersionen ist jedoch nicht erwünscht. Zum einen bestehen regelmäßig Unverträglichkeiten des polymeren verdickungsmittels mit den filmbildenden Polymeren der wässrigen Zubereitungen. Hierdurch verschlechtern sich die mechanischen Eigenschaften der aus den dispergierten Polymeren resultierenden Polymerfilme. Häufig wirken Verdicker auf die dispergierten Polymere auch als Flockungsmittel. Verdicker für wässrige Zubereitungen sind häufig wasserlöslich bzw. hygroskopisch und erhöhen somit die Wasserempfindlichkeit der Polymerfilme.

Der vorliegenden Erfindung liegt die Aufgabe zugrunde, Zubereitungen auf der Basis wässriger Polymerisatdispersionen bereitzustellen, die zur Einstellung einer geeigneten Verarbeitungsviskosität geringere Mengen an Verdickungsmitteln benötigen als die aus dem Stand der Technik bekannten Zubereitungen.

Es wurde nun überraschenderweise gefunden, daß wässrige Zubereitungen auf der Basis eines Blends wenigstens zweier verschiedener Polymerisatdispersionen die gewünschten Eigenschaften aufweisen, wenn die in ihnen enthaltenen, dispergierten Polymere sich hinsichtlich ihrer Hydrophobie unterscheiden.

Die experimentell grundsätzlich nur schwer zu bestimmende Hydrophobie eines Polymeren (siehe Wu, J. Macromol. Sci-Revs. Macromol. Chem. C10(1), 1974, 1-73) ergibt sich indirekt aus der Wasserlöslichkeit der Monomere, aus denen das Polymer aufgebaut ist. Polymere die aus wenigstens 20 Gew.-% Monomeren mit einer Wasserlöslichkeit im Bereich von 10 bis 100 g/l (bei 25 °C) und weniger als 80 Gew.-% Monomeren mit einer Wasserlöslichkeit unterhalb 10 g/l (bei 25 °C) aufgebaut sind, können als hydrophile Polymere aufgefasst werden. Polymere, die aus wenigstens 80 Gew.-% Monomeren mit einer Wasserlöslichkeit < 10 g/l (bei 25 °C) und weniger als 20 Gew.-% Monomeren mit einer Wasserlöslichkeit im Bereich von 10 bis 100 g/l (bei 25 °C) aufgebaut sind, können als hydrophobe Polymere aufgefasst werden.

Die vorliegende Erfindung betrifft somit wässrige Zubereitungen, enthaltend:

i. wenigstens ein hydrophiles teilchenförmiges Polymer P1 als wässrige Dispersion, das aus ethylenisch ungesättigten Monomeren M aufgebaut ist, umfassend:

20 bis 100 Gew.-% wenigstens eines monoethylenisch ungesättigten Monomers M1 mit einer Wasserlöslichkeit im Bereich von 10 g/l bis 100 g/l (bei 25 °C und 1 bar),
0 bis 80 Gew.-% eines oder mehrerer monoethylenisch ungesättigter Monomere M2 mit einer Wasserlöslichkeit unterhalb 10 g/l (bei 25 °C und 1 bar), und
0 bis 20 Gew.-% eines oder mehrerer Monomere M3, die von den Monomeren M1 und M2 verschiedenen sind, und

ii. wenigstens ein hydrophobes, teilchenförmiges Polymer P2 als wässrige Dispersion, das aus ethylenisch ungesättigten Monomeren M' aufgebaut ist, umfassend:

0 bis 20 Gew.-% eines oder mehrerer monoethylenisch ungesättigter Monomere M1' mit einer Wasserlöslichkeit im Bereich von 10 g/l bis 100 g/l (bei 25 °C und 1 bar),
80 bis 100 Gew.-% wenigstens eines monoethylenisch ungesättigten Monomers M2' mit einer Wasserlöslichkeit unterhalb 10 g/l (bei 25 °C und 1 bar), und
0 bis 20 Gew.-% eines oder mehrerer Monomere M3', die von den Monomeren M1' und M2' verschiedenen sind, und

wobei die Glasübergangstemperatur $T_G1$ des Polymeren P1 von der Glasübergangstemperatur $T_G2$ des Polymeren P2 weniger als 10 K abweicht und wobei die Gewichtsanteile der Monomere M1, M2 und M3 sowie der Monomere M1', M2' und M3' sich jeweils zu 100 Gew.-% addieren. Werte für die Wasserlöslichkeit ethylenisch ungesättigter Monomere sind beispielsweise in "Ullmanns Encyclopedia of Industrial Chemistry, 5th ed. Vol 21 A, VCH Publishers 1992, S. 159-161" tabelliert.

Beispiele für bevorzugte Monomere M1 bzw. M1' sind Methylmethacrylat, Methylacrylat, Ethylacrylat, n- und iso-Propylacrylat, Vinylacetat, Acrylnitril, Methacrylnitril und N-Vinylcaprolactam, insbesondere Methylmethacrylat, Acrylnitril und Vinylacetat.

Bevorzugte Monomere M2 bzw. M2' umfassen $C_2$-$C_{18}$-Alkylmethacrylate wie Ethylmethacrylat, n- und Isopropylmethacrylat, n-Butylmethacrylat, Isobutylmethacrylat, tert.-Butylmethacrylat und 2-Ethylhexylmethacrylat, $C_4$-$C_{18}$-Alkylacrylate wie n-Butylacrylat, Isobutylacrylat, tert.-Butylacrylat, n-Hexylacrylat, 2-Ethylhexylacrylat, Laurylacrylat und Stearylacrylat, vinylaromatischen Monomere wie Styrol, $\alpha$-Methylstyrol, o-Chlorstyrol oder Vinyltoluole, Vinylester von aliphatischen $C_3$-$C_{18}$-Monocarbonsäuren, wie Vinylpropionat, Vinylbutyrat, Vinylvalerat, Vinylhexanoat, Vinyl-2-ethylhexanoat, Vinyldecanoat, Vinylpivalat, Vinyllaurat, Vinylstearat sowie im Handel befindliche Monomere VEOVA® 5-11 (VEOVA® X ist ein Handelsname der Fa. Shell und steht für Vinylester von $\alpha$-verzweigten, aliphatischen Carbonsäuren mit X C-Atomen, die auch als Versatic® X-Säuren bezeichnet werden), $C_2$-$C_6$-Olefine wie Ethylen und Isobuten, konjugierte Diene wie Butadien und Isopren, Vinylchlorid und Vinylidenchlorid.

Die erfindungsgemäßen, hydrophilen Polymere P1 enthalten vorzugsweise 20 bis 90 Gew.-%, insbesondere 30 bis 85 Gew.-% Monomere M1 sowie 10 bis 80 Gew.-%, insbesondere 15 bis 70 Gew.-% Monomere M2 einpolymerisiert.

Die erfindungsgemäßen, hydrophoben Polymere P2 enthalten vorzugsweise nicht mehr als 15 Gew.-%, insbesondere nicht mehr als 10 Gew.-% Monomere M1' sowie vorzugsweise wenigstens 85 Gew.-% und insbesondere wenigstens 90 Gew.-% Monomere M2' einpolymerisiert.

Erfindungsgemäße, hydrophile Polymere P1 sind beispielsweise aufgebaut aus:

20 bis 80 Gew.-%, insbesondere 30 bis 70 Gew.-% Methylmethacrylat als Monomer M1,
20 bis 79,9 Gew.%, insbesondere 30 bis 69,9 Gew.-% wenigstens eines Monomers M2, ausgewählt unter den $C_4$-$C_8$-Alkylacrylaten, Styrol und $\alpha$-Methylstyrol, und
0,1 bis 10 Gew.-%, insbesondere 0,1 bis 5 Gew.-% wenigstens eines Monomers M3,

oder aus:

20 bis 90 Gew.-%, insbesondere 30 bis 85 Gew.-% Vinylacetat als Monomer M1,
10 bis 80 Gew.-%, insbesondere 15 bis 70 Gew.-% wenigstens eines Monomers M2, ausgewählt unter Ethylen, den Vinylestern aliphatischer $C_3$-$C_{12}$-Carbonsäuren und den $C_4$-$C_8$-Alkylacrylaten, und
0 bis 10 Gew.-%, insbesondere 0 bis 5 Gew.-% eines oder mehrerer Monomere M3.

Erfindungsgemäße hydrophobe Polymer P2 sind beispielsweise aufgebaut aus:

2 bis 19,9 Gew.-%, insbesondere 5 bis 14,9 Gew.-% Methylmethacrylat als Monomer M1',
80 bis 97,9 Gew.%, insbesondere 85 bis 95 Gew.-% wenigstens eines Monomers M2', ausgewählt unter den

$C_4$-$C_8$-Alkylacrylaten, Styrol und α-Methylstyrol, und
0,1 bis 10 Gew.-%, insbesondere 0,1 bis 5 Gew.-% und speziell 0,1 bis 3 Gew.-% wenigstens eines Monomers M3',

oder aus:

5 bis 20 Gew.-% Vinylacetat als Monomer M1',
80 bis 95 Gew.-% wenigstens eines Monomers M2', ausgewählt unter Ethylen, den Vinylestern aliphatischer $C_3$-$C_{12}$-Carbonsäuren und den $C_4$-$C_8$-Alkylacrylaten, und
0 bis 10 Gew.-%, insbesondere 0 bis 5 Gew.-% und speziell 0 bis 3 Gew.-% eines oder mehrerer Monomere M3',

oder aus:

90 bis 99,9 Gew.-%, insbesondere 95 bis 99,9 Gew.-% und speziell 97 bis 99,9 Gew.-% wenigstens zweier verschiedener Monomere M2', ausgewählt unter den $C_4$-$C_8$-Alkylacrylaten und den $C_2$-$C_8$-Alkylmethacrylaten, und
0,1 bis 10 Gew.-%, insbesondere 0,1 bis 5 Gew.-% und speziell 0,1 bis 3 Gew.-% wenigstens eines Monomers M3'.

Typische Monomere M1 und Monomerkombinationen M1/M2 für hydrophile Polymere P1 sind: Methylmethacrylat und/oder Vinylacetat als alleinige Monomere M1; Methylmethacrylat mit n-Butylacrylat und/oder 2-Ethylhexylacrylat mit einem Gewichtsverhältnis M1/M2 im Bereich von 3/7 bis 7/3; Methylmethacrylat mit Styrol und gegebenenfalls n-Butylacrylat und/oder 2-Ethylhexylacrylat, mit einem Gewichtsverhältnis M1/M2 im Bereich von 3/7 bis 7/3; Vinylacetat mit dem Vinylester der Versatic-10-Säure und/oder n-Butylacrylat mit einem Gewichtsverhältnis M1/M2 im Bereich von 3/7 bis 7/3; Vinylacetat mit Ethylen und gegebenenfalls Vinylestern von Versatic® 10-Säure mit einem Gewichtsverhältnis M1/M2 im Bereich von 1/1 bis 9/1.

Typische Monomere M2' und Monomerkombinationen M1'/M2' für hydrophobe Polymere P2 sind: n-Butylmethacrylat als alleiniges Monomer M2'; Styrol mit n-Butylacrylat und/oder 2-Ethylhexylacrylat als alleinige Monomere M2' mit einem Gewichtsverhältnis im Bereich von 2/8 bis 8/2; Methylmethacrylat mit n-Butylacrylat und/oder 2-Ethylhexylacrylat mit einem Gewichtsverhältnis M1'/M2' im Bereich von 5/95 bis 15/85; Vinylacetat mit dem Vinylester der Versatic® 10-Säure mit einem Gewichtsverhältnis M1'/M2' im Bereich von 5/95 bis 15/85; tert.-Butylacrylat mit n-Butylacrylat im Gewichtsverhältnis 2/8 bis 8/2.

Als Monomere M3 bzw. M3' kommen beispielsweise Monomere mit einer erhöhten Wasserlöslichkeit, d.h. > 100 g/l (bei 25 °C), in Frage. Derartige Monomere umfassen monoethylenisch ungesättigte $C_3$-$C_8$-Monocarbonsäuren, wie Acrylsäure, Methacrylsäure, Crotonsäure, Vinylessigsäure, Acrylamidoglykolsäure und Methacrylamidoglykolsäure, monoethylenisch ungesättigten $C_4$-$C_8$-Dicarbonsäuren, wie Maleinsäure, Itaconsäure und Citraconsäure, deren Halbester mit $C_1$-$C_{12}$-Alkanolen, wie Monomethylmaleinat und Mono-n-butylmaleinat, ethylenisch ungesättigte Sulfonsäuren, wie Vinylsulfonsäure, 2-Acrylamido- 2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze. Die Monomere mit erhöhter Wasserlöslichkeit umfassen auch neutrale Monomere, z.B. die Amide und die N-Alkylolamide ethylenisch ungesättigter Monocarbonsäuren wie Acrylamid, Methacrylamid, N-Methylolacrylamid und N-Methylolmethacrylamid, die Hydroxyalkylester der vorgenannten ethylenisch ungesättigten Mono- und Dicarbonsäuren, z. B. Hydroxyethylacrylat, Hydroxypropylacrylat, 4-Hydroxybutylacrylat, die entsprechenden Methacrylate und wasserlösliche N-Vinyllactame, z. B. N-Vinylpyrrolidon. Bevorzugte Monomere mit erhöhter Wasserlöslichkeit sind Acrylsäure, Methacrylsäure, Itaconsäure, Citraconsäure, Acrylamid und Methacrylamid.

Vorzugsweise werden die vorgenannten Monomere mit erhöhter Wasserlöslichkeit in einer Menge von 0,1 bis 10 Gew.-%, insbesondere 0,1 bis 5 Gew.-% bei der Herstellung der Polymere P1 bzw. P2 eingesetzt. Insbesondere das Hydrophobe Polymer P2 umfasst nicht mehr als 10 Gew.-%, vorzugsweise nicht mehr als 5 Gew.-% und speziell nicht mehr als 3 Gew.-%, bezogen auf das Gesamtgewicht der Monomere M', Monomere mit erhöhter Wasserlöslichkeit.

Die Polymere P1 und P2 können als Monomere M3 bzw. M3' unabhängig voneinander auch die aus der US-5,208,285 bekannten Monomere mit cyclischen Harnstoffgruppen wie N-Vinyl- und N-Allylimidazolidin-2-on, N-Vinyloxyethylimidazolidin-2-on, N-(2-(Meth)acrylamidoethyl)imidazolidin-2-on, N-(2-(Meth)acryloxyethyl)imidazolidin-2-on und N-[2-((Meth)acryloxyacetamido)ethyl]imidazolidin-2-on einpolymerisiert enthalten. Derartige Monomere können in Mengen von 0,1 bis 10 Gew.-%, insbesondere 0,5 bis 5 Gew.-%, bezogen auf das Gesamtgewicht der Monomere M bzw. M' verwendet werden. Monomere mit cyclischen Harnstoffgruppen verbessern die Nasshaftung der aus den erfindungsgemäßen Zubereitungen erhältlichen Beschichtungen.

Weiterhin können sowohl das Polymer P1 als auch das Polymer p2 Monomere mit zwei oder mehr, nicht konjugierten, ethylenisch ungesättigten Doppelbindungen als Monomere M3 bzw. M3' einpolymerisiert enthalten, z.B. die Diester zweiwertiger Alkohole mit α,β-monoethylenisch ungesättigten $C_3$-$C_8$-Carbonsäuren, z. B. Glykolbisacrylat

oder Ester von α,β-monoethylenisch ungesättigten Carbonsäuren mit Alkenolen, z. B. Bicyclodecenyl(meth)acrylat, ferner Divinylbenzol, N,N'-Divinylharnstoff, N,N'-Divinylimidazolinon und Diallylphthalat. Derartige Monomere werden, sofern erwünscht, in untergeordneter Menge, d. h. in Mengen von 0,01 bis 2 Gew.-% bezogen auf die Gesamtmonomermenge, verwendet.

Die Polymere P1 und P2 können unabhängig voneinander auch Siloxangruppen enthaltende Monomere als Monomere M3 bzw. M3' einpolymerisiert enthalten, die die Pigmentbindekraft der Polymere P1 bzw. P2 verbessern. Hier sind beispielsweise Vinyltrialkoxysilane, z. B. Vinyltrimethoxysilan, Alkylvinyldialkoxysilane oder (Meth)acryloxyalkyltrialkoxysilane, z. B. (Meth)acryloxyethyltrimethoxysilan, (Meth)acryloxypropyltrimethoxysilan zu nennen. Die genannten Monomere können, sofern erwünscht, in Mengen von bis zu 1 Gew.-%, vorzugsweise 0,05 bis 0,5 Gew.-%, bezogen auf die Gesamtmonomermenge, verwendet werden.

Erfindungsgemäß weisen die Polymere P1 und P2 eine vergleichbare Glasübergangstemperatur auf, d.h. die Glasübergangstemperatur $T_G1$ des Polymeren P1 und die Glasübergangstemperatur $T_G2$ des Polymeren P2 weichen nicht mehr als 10 K und vorzugsweise nicht mehr als 5 K voneinander ab. Wässrige zubereitungen, die wenigstens ein hydrophiles Polymer P1 und wenigstens ein hydrophobes Polymer P2 als wässrige Dispersionen enthalten, zeigen allerdings auch dann bereits bei geringen Mengen an Verdicker eine höhere Viskosität als die Polymerisatdispersionen des Standes der Technik, wenn die Glasübergangstemperatur des hydrophoben Polymers von der des hydrophilen Polymers mehr als 10 K abweicht. Die Glasübergangstemperaturen der Polymere P1 bzw. P2 können in bekannter Weise, beispielsweise durch Differential-Kalorimetrie (z.B. gemäß ASTM D 3418-82) bestimmt werden.

Typischerweise liegt die Glasübergangstemperatur der Polymere P1 und P2 in einem Bereich von -50 bis +100 °C, wobei die konkrete Glasübergangstemperatur vom jeweiligen Verwendungszweck abhängt. Bei pigmenthaltigen Anstrichmitteln (=Dispersionsfarben) werden sowohl $T_G1$ als auch $T_G2$ in der Regel im Bereich von -10 bis +50 °C liegen. Flexible Beschichtungsmassen werden in der Regel Polymere P1 und P2 enthalten, deren Glasübergangstemperaturen $T_G1$ und $T_G2$ im Bereich von -40 bis +10 °C liegen. Blockfeste Klarlacke und polymergebundene Farben mit einem geringen Pigmentgehalt werden häufig Polymere P1 und P2 mit Glasübergangstemperaturen $T_G1$ und $T_G2$ im Bereich von +10 bis +80 °C enthalten.

In diesem Zusammenhang erweist es sich als hilfreich, die Glasübergangstemperatur $T_G$ der Polymere P1 bzw. P2 abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17, 18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \cdots \frac{X^n}{T_g^{\,n}}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Üblicherweise werden die Polymerisatteilchen der Polymere P1 und P2 einen gewichtsmittleren Polymerisatteilchendurchmesser im Bereich von 10 bis 1000 nm, insbesondere im Bereich von 30 bis 600 nm aufweisen (bestimmt mittels Ultrazentrifuge oder Photonenkorrelationsspektroskopie; zur Teilchengrößenbestimmung mittels Ultrazentrifuge siehe z.B. W. Mächtle, Makromolekulare Chemie, 1984, Bd. 185, 1025-1039, W. Mächtle, Angew. Makromolekulare Chemie, 1988, 162, 35-42). Es hat sich als vorteilhaft erwiesen, wenn der mittlere Teilchendurchmesser des hydrophoben Polymeren P1 unterhalb 150 nm insbesondere unterhalb 120 nm, besonders bevorzugt unterhalb 100 nm und speziell im Bereich von 50 bis 90 nm liegt. Der Teilchendurchmesser des erfindungsgemäßen hydrophilen Polymers P1 ist grundsätzlich von untergeordneter Bedeutung. Vorzugsweise ist er größer als der des hydrophoben Polymers P2 und liegt insbesondere im Bereich von 50 bis 300 nm und speziell im Bereich von 70 bis 250 nm.

Die Herstellung der erfindungsgemäßen Polymere P1 und P2 erfolgt in der Regel durch radikalische wässrige Emulsionspolymerisation der vorgenannten Monomere nach bekannten Verfahren.

Als radikalische Polymerisationsinitiatoren kommen grundsätzlich sowohl Peroxide, z. B. Wasserstoffperoxid, organische Peroxide und Hydroperoxide wie Dibenzoylperoxid und tert.-Butylhydroperoxid, Persäuren wie Peroxopivalat, Alkalimetall- und Ammoniumperoxodisulfate wie Natriumperoxodisulfat oder Ammoniumperoxodisulfat als auch Azoverbindungen in Betracht. Bevorzugt werden Redoxinitiatorsysteme verwendet, die aus wenigstens einem organischen Reduktionsmittel und wenigstens einem Peroxid, einem Hydroperoxid oder einer Persäure zusammengesetzt sind. Als Reduktionsmittel kommen insbesondere Schwefelverbindungen wie das Natriumsalz der Hydroxymethansulfinsäure, Natriumsulfit, Natriumdisulfit, Natriumthiosulfat oder Acetonbisulfit-Addukt, Stickstoff enthaltende Verbindungen wie Triethylamin, Hydrazin und Hydroxylamin, weiterhin Ascorbinsäure, Glykolsäure und Weinsäure in Frage. Bevorzugt werden auch solche Redoxinitiatorsysteme, die eine geringe Menge einer im Polymerisationsmedium löslichen Metallverbindung enthalten, deren metallische Komponente in mehreren Wertigkeitsstufen auftreten kann, z. B. Vanadiumsulfat, Eisen(II)sulfat oder Eisenkomplexe, z.B den Komplex aus Eisen mit Ethylendiamintetraessigsäure (als Natriumsalz). Vorzugsweise beträgt die Menge der eingesetzten radikalischen Initiatoren, bezogen auf die Gesamtmenge der zu polymerisierenden Monomere, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 20 Gew.-%, vorzugsweise 0,1 bis 10 Gew.-% und insbesondere 0,5 bis 6 Gew.-%, bezogen auf die zu polymerisierenden Monomere eingesetzt.

Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Bevorzugt werden anionische Emulgatoren oder Kombinationen aus wenigstens einem anionischen und einem nichtionischen Emulgator.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Zu den anionischen Emulgatoren zählen auch Mono- und Dialkylderivate von Sulfonylphenoxybenzolsulfonsäure-Salzen, insbesondere von deren Natrium-, Kalium- oder Calciumsalzen. Die Alkylgruppen in diesen Verbindungen weisen in der Regel 6 bis 18 und insbesondere 6, 12 oder 16 C-Atome auf. Häufig werden technische Gemische verwendet, die einen Anteil von 50 bis 90 Gew.-% des monoalkylierten Produktes aufweisen. Diese Verbindungen sind allgemein bekannt, z. B. aus der US-A-4,269,749, und im Handel erhältlich, beispielsweise als Dowfax® 2A1 (Warenzeichen der Dow Chemical Company).

Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208.

Bei der Polymerisation können Regler eingesetzt werden, z.B. in Mengen von 0 bis 1 Gew.-%, bezogen auf 100 Gew.-% der zu polymerisierenden Monomere, durch die die Molmasse der Polymere verringert wird. Geeignet sind z.B. Verbindungen mit einer Thiolgruppe wie tert. Butylmercaptan, tert. Dodecylmercaptan, Thioglykolsäure, deren Ester, Mercaptoethanol oder Mercaptopropyltrimethoxysilan.

Die Emulsionspolymerisation erfolgt in der Regel bei 30 bis 130°C, vorzugsweise 50 bis 100 °C. Das Polymerisationsmedium kann sowohl nur aus Wasser, als auch aus Mischungen aus Wasser und damit mischbaren Flüssigkeiten wie Methanol, Ethanol oder iso-Propanol bestehen. Vorzugsweise wird nur Wasser verwendet. Die Emulsionspolymerisation kann sowohl als Batchprozeß als auch in Form eines Zulaufverfahrens, einschließlich Stufen oder Gradientenfahrweise, durchgeführt werden. Bevorzugt ist das Zulaufverfahren, bei dem man die Monomeren in reiner oder in emulgierter Form kontinuierlich, stufenweise oder unter Überlagerung eines Konzentrationsgefälles unter Aufrechterhaltung der Polymerisation der Polymerisationszone zuführt. Die einzelnen Komponenten können dem Reaktor beim Zulaufverfahren von oben, in der Seite oder von unten durch den Reaktorboden zugegeben werden.

Bei der Polymerisation kann auch z.B. zur besseren Einstellung der Teilchengröße eine Polymersaat (wässriger Saatlatex) vorgelegt werden. Der Saatlatex weist in der Regel eine gewichtsmittlere Teilchengröße von 10 bis 200 nm und insbesondere 20 bis 100 nm und speziell 25 bis 50 nm auf. Seine konstituierenden Monomere sind beispielsweise Styrol, Methylmethacrylat, n-Butylacrylat und Mischungen davon.

Die Art und Weise, wie der Initiator im Verlauf der radikalischen wäßrigen Emulsionspolymerisation dem Polymerisationsgefäß zugegeben wird, ist dem Durchschnittsfachmann bekannt. Er kann sowohl vollständig im Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Zur Entfernung der Restmonomeren wird üblicherweise im Anschluß an die Polymerisation eine Desodorierung auf physikalischem Wege, z. B. durch Abdestillieren der flüchtigen Monomere mit Wasserdampf, oder auf chemischem Wege durchgeführt. Bei der chemischen Desodorierung wird nach Ende der eigentlichen Emulsionspolymerisation, d.h. nach einem Umsatz der Monomeren von mindestens 95 %, weiterer Initiator, z.B. ein Redoxinitiator zugesetzt.

Auf diesem Wege sind wässrige Dispersionen der Polymere P1 und P2 mit Polymergehalten bis zu 70 Gew.-%, bezogen auf das Gesamtgewicht der jeweiligen Polymerisatdispersion, zugänglich. Aus praktischen Gründen werden vorzugsweise Dispersionen mit Polymergehalten im Bereich von 30 bis 60 Gew.-% verwendet.

Die Herstellung der erfindungsgemäßen Zubereitungen erfolgt in der Regel durch Abmischen der wässrigen Polymerisatdispersionen der Polymere P1 und P2 nach bekannten Verfahren, beispielsweise in einem Rührkessel oder in anderen, für wässrige Polymerisatdispersionen besonders geeigneten Mischvorrichtungen, z.B. statischen Mischern wie statischen Inline-Mischern.

In den erfindungsgemäßen, wässrigen Zubereitungen ist es von Vorteil, wenn das hydrophile Polymer P1 wenigstens 50 Gew.-%, bezogen auf die Gesamtmenge an dispergiertem Polymer, ausmacht. Vorzugsweise liegt das Gewichtsverhältnis von hydrophilem Polymer P1 zu hydrophobem Polymer P2 im Bereich von 99:1 bis 50:50 und insbesondere im Bereich von 95:5 bis 70:30.

Wie bereits erwähnt enthalten wässrige Zubereitungen auf Basis wässriger Polymerisatdispersionen zur Einstellung einer geeigneten Verarbeitungsviskosität häufig Verdickungsmittel. Verdikkungsmittel für wässrige Zubereitungen sind in der Regel wässrige Lösungen oder Dispersionen von Polymeren P3, die von den Polymeren P1 und P2 verschieden sind (s.o.). Demnach betrifft die vorliegende Erfindung auch wässrige Zubereitungen, die neben den Polymeren P1 und P2 wenigstens ein verdickend wirkendes Polymer P3 in gelöster Form enthalten.

Verdickend wirkende Polymere P3 umfassen hydrophile oder wasserlösliche Polymere mit polaren Gruppen, z.B. Hydroxyl-, Carbonsäure oder Carboxamidgruppen, die mit den Wassermolekülen Wasserstoffbrückenbindungen bilden können. Hierzu zählen wasserlösliche organische Polymere, z.B. Cellulosen und Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate. Verdickend wirkende Polymere P3 umfassen auch anorganische Polymere, z. B. Polykieselsäuren und Tonmineralien wie Bentonite oder Hektorit.

Erfindungsgemäß bevorzugte verdickend wirkende Polymere P3 sind Assoziativverdicker, beispielsweise Styrol-Maleinsäureanhydrid-Copolymerisate und insbesondere hydrophob modifizierte Polyetherurethane, wie sie beispielsweise von N. Chen et al. in J. Coatings Techn. Vol 69, No. 867, 1997, S. 73 und von R. D. Hester et al. J. Coatings Technology, Vol. 69, No. 864, 1997, 109 beschrieben sind. Auf die Offenbarung dieser Schriften wird hiermit in vollem Umfang Bezug genommen.

Beispiele für hydrophob modifizierte Polyetherurethane sind Polymere der allgemeinen Formel

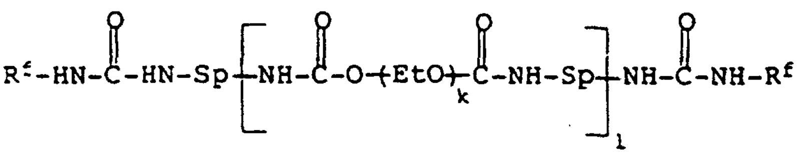

worin $R^f$ für einen hydrophoben Rest, vorzugsweise einen linearen oder verzweigten Alkylrest mit 10 bis 20 Kohlenstoffatomen, Et für 1,2-Ethylen steht, Sp für $C_2$-$C_{10}$-Alkylen, Cycloalkylen oder Arylen steht, k für eine Zahl im Bereich von 50 bis 1000 und l für eine Zahl im Bereich von 1 bis 10, wobei vorzugsweise das Produkt k x 1 im Bereich von 300 bis 1000 liegt. Zu den hydrophob modifizierten Polyetherurethanen zählen auch die Umsetzungsprodukte von Di- oder Polyisocyanaten mit alkoxilierten, langkettigen Alkanolen. Geeignete Di- oder Polyisocyanate sind in diesem Zusammenhang beispielsweise Hexamethylendiisocyanat, Isophorondiisocyanat, Toluoldiisocyanat, sowie deren Cyanurate und Biurete. Geeignete älkoxylierte Alkanole sind z.B. ethoxilierte Alkanole mit 8 bis 22 C-Atomen (Ethoxilierungsgrad 3 bis 50).

Üblicherweise enthalten die erfindungsgemäßen Zubereitungen, bezogen auf ihr Gesamtgewicht, verdickend wirkende Polymere P3 in Mengen von 0,01 bis 5 Gew.-%, vorzugsweise in Mengen von 0,02 bis 1 Gew.-% und insbesondere in Mengen von 0,05 bis 0,5 Gew.-%.

Üblicherweise enthalten die erfindungsgemäßen Zubereitungen neben den Polymeren P1, P2 und P3 je nach Verwendungszweck übliche Hilfsmittel in einer Menge von 0,1 bis 20 Gew.-% bezogen auf das Gesamtgewicht der Zubereitung.

Zu den üblichen Hilfsmitteln zählen Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 0,6 Gew.-% bezogen auf das Gesamtgewicht der Dispersionsfarbe eingesetzt. Ferner umfassen die Hilfsmittel in der Regel auch Entschäumer, Konservierungs- oder Hydrophobiermittel, Biozide.

Auch können die erfindungsgemäßen wässrigen Zubereitungen zur Einstellung der Filmbildeeigenschaften der Polymere P1 und P2 sog. Filmbildekonsolidierungsmittel (weichmacher) enthalten, z. B. Ethylenglykol, Propylenglykol, Butylenglykol, Hexylenglykol, Alkylether und -etherester von Glykolen und Polyglykolen, z. B. Diethylenglykolmonoethylether, Diethylenglykolmonoethyletheracetat, Diethylenglykolmonobutylether, Hexylenglykoldiacetat, Propylenglykolmonoethylether, -monophenylether, -monobutylether und -monopropylether, Dipropylenglykolmonomethylether, Dipropylenglykolmono-n-butylether, Tripropylenglykolmono-n-butylether, und die Acetate der vorgenannten Monoalkylether, z. B. Butoxybutylacetat, ferner Alkylester aliphatischer Mono- und Dicabonsäuren, z. B. Texanol® der Eastman, oder technische Gemische von Dibutylestern der Bernsteinsäure, Glutarsäure und Adipinsäure. Daneben können die erfindungsgemäßen zubereitungen als Filmbildehilfsmittel Kohlenwasserstoffe bzw. deren Gemische, mit oder ohne aromatische Bestandteile, z. B. Testbenzine des Siedebereichs 140 bis 210 °C enthalten. Filmbildehilfsmittel werden üblicherweise in Mengen von 0,1 bis 10 Gew.-%, bezogen auf das in der Zubereitung enthaltene Copolymer P1 und P2, eingesetzt.

Gebrauchsfertige, pigmentfreie Zubereitungen werden in der Regel 10 bis 50 Gew.-% Polymere P1 und P2, verdickend wirkendes Polymer P3 in den oben angegebenen Mengen, bis zu 10 Gew.-% übliche Hilfsmittel sowie Wasser ad 100 Gew.-% enthalten.

Eine spezielle Ausführungsform der vorliegenden Erfindung betrifft pigmenthaltige Zubereitungen, insbesondere in Form von Dispersionsfarben. Hierin wirken die Polymere P1 und P2 als filmbildender Bestandteil und zugleich als Bindemittel für die Pigmentpartikel. Derartige Zubereitungen enthalten zusätzlich zu den Polymeren P1, P2 und gegebenenfalls P3 wenigstens einen organischen oder anorganischen Feststoff in dispers verteilter Form, der ausgewählt ist unter organischen oder anorganischen Pigmenten, sowie organischen oder anorganischen Füllstoffen.

Der Gesamtfeststoffgehalt in den erfindungsgemäßen, pigmenthaltigen Zubereitungen, der sich in der Regel aus den Polymeren P1, P2 und P3 sowie den Füllstoffen und Pigmenten zusammensetzt, liegt in der Regel im Bereich von 20 bis 90 Gew.-%, bezogen auf das Gesamtgewicht der Zubereitung. Das Volumenverhältnis von Polymeren P1 + P2 zu den Füllstoffen und Pigmenten liegt in der Regel im Bereich von 15:85 bis 85:15. Weiterhin enthalten die pigmenthaltigen Zubereitungen in der Regel wenigstens ein verdickend wirkdendes Polymer P3 in den oben angegebenen Mengen sowie übliche Hilfsmittel.

Typische Pigmente für die erfindungsgemäßen Zubereitungen, insbesondere für Dispersionsfarben, sind beispielsweise Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat). Die Zubereitungen können jedoch auch farbige Pigmente, beispielsweise Eisenoxide, Ruß, Graphit enthalten. Neben den anorganischen Pigmenten können die erfindungsgemäßen Zubereitungen auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Geeignete Füllstoffe umfassen grundsätzlich Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Zur Erhöhung der Deckkraft und zur Einsparung von Weißpigmenten werden in den bevorzugten Dispersionsfarben häufig feinteilige Füllstoffe, z. B. feinteiliges Calciumcarbonat oder Mischungen verschiedener Calciumcarbonate mit unterschiedlichen Teilchengrößen eingesetzt. Zur Einstellung der Deckkraft, des Farbtons und der Farbtiefe werden vorzugsweise Abmischungen aus Farbpigmenten und Füllstoffen eingesetzt.

Die erfindungsgemäßen Zubereitungen sind stabile, fluide Systeme, welche für eine Vielzahl von Anwendungen geeignet sind, beispielsweise als pigmenthaltige Beschichtungsmittel wie Dispersionsfarben, Dichtungsmassen, Beschichtungsmassen oder Asphaltmassen, als pigmentfreie Beschichtungssysteme wie Klarlacke und Polituren, als Klebstoffe und Klebrohstoffe sowie als Beschichtungmitteln für Papier, Fasern oder Leder. Ihr Vorteil ist insbesondere darin zu sehen, daß bereits geringe Mengen an Verdikkungsmitteln ausreichen, um die jeweils gewünschte Verarbeitungsviskosität einzustellen. Dies hat zur Folge, daß die Qualität der von den Polymeren P1 und P2 gebildeten Polymerfilme den aus dem Stand der Technik bekannten Polymerfilmen überlegen ist.

Die vorliegende Erfindung betrifft auch die Verwendung der erfindungsgemäßen Zubereitungen zum Beschichten von Substraten. Übliche Substrate sind beispielsweise Holz, Beton, Metall, Glas, Keramiken, Plastik, Putze, Tapeten, gestrichene, grundierte oder verwitterte Untergründe, sowie Papier, Fasern oder Leder. Das Beschichten der Substrate erfolgt durch Aufbringen der Zubereitung auf das zu beschichtende Substrat in einem von der Ausgestaltung der Zubereitung abhängigen Weise. Das Aufbringen kann, abhängig von Viskosität und Pigmentgehalt der Zubereitung sowie dem Substrat, mittels Rollen, Bürsten, Rakeln oder als Spray erfolgen.

Die im folgenden aufgeführten Beispiele sollen die Erfindung verdeutlichen.

I. Analytik

Die mittlere Teilchengröße (z-Mittelwert) der Polymerisatteilchen wurde durch dynamische Lichtstreuung (Photonenkorrelationsspektroskopie) an einer 0,01 gew.-%igen Dispersion in Wasser bei 23 °C mittels eines Autosizers IIc der Fa. Malvern Instruments, England, ermittelt. Angegeben wird der mittlere Durchmesser der Kumulantenauswertung (cumulant z-average) der gemessenen Autokorrelationsfunktion.

Die Bestimmung der Glasübergangstemperatur erfolgte mittels Differentialkalorimetrie (DSC) gemäß ASTM D 3418-82.

II. Herstellung der Polymerisatdispersionen P1 und P2

Dispersion 1 (Hydrophiles Polymer)

In einem Emulgiergefäß wurde eine wässrige Monomeremulsion aus:

| | |
|---|---|
| 302 g | entionisiertem Wasser |
| 18 g | Emulgatorlösung 1 |
| 100 g | Emulgatorlösung 2 |
| 408 g | Methylmethacrylat |
| 372 g | n-Butylacrylat |
| 12 g | Methacrylsäure und |
| 16 g | einer 50 gew.-%igen wässrigen Acrylamid-Lösung hergestellt. |

In einen Reaktor legte man 250 g entionisiertes Wasser, 90 mg des Natriumsalzes des Eisenkomplexes der Ethylendiamintetraessigsäure und 37 g einer Polystyrolsaat-Dispersion (Teilchengröße etwa 30 nm, Feststoffgehalt etwa 33 Gew.-%) vor und erwärmte auf 60 °C. Anschließend gab man 17,7 g wässrige Initiatorlösung 1 und 14,7 g wässrige Initiatorlösung 2 über getrennte Zuläufe in einer Portion zu. Danach gab man die Monomeremulsion innerhalb von 3 Stunden und die verbleibenden Initiatorlösungen innerhalb von 4 Stunden zu. Nach Beendigung der Initiatorzugabe gab man 6,14 g einer 3,3 gew.-%igen, wässrigen tert.-Butylhydroperoxidlösung, 5,5 g einer 13,1 gew.-%igen, wässrigen Acetonbisulfitlösung und 5 g Wasser in den Reaktor und behielt die 60 °C 1 Stunde bei. Anschließend kühlte man auf Raumtemperatur und stellte den pH-Wert mit 25 gew.-%iger Ammoniaklösung auf 8,5 ein. Die erhaltene Dispersion war frei von Koagulat und wies einen Feststoffgehalt von 49,2 Gew.-% auf. Der gewichtsmittlere Teilchendurchmesser des Polymerisats lag bei 149 nm. Die Glasübergangstemperatur des Polymeren lag bei 27 °C.

Initiatorlösung 1: 18,3 g einer 13,1 gew.-%igen wässrigen Lösung des Aceton-Bisulfit-Addukts 70,00 g entionisiertes Wasser

Initiatorlösung 2: 3,43 g einer 70 gew.-%igen wässrigen tert.-Butylhydroperoxid-Lösung 70,00 g entionisiertes Wasser

Emulgatorlösung 1: 45 gew.-%ige Lösung von (Dodecylsulfonylphenoxy)benzolsulfonsäurenatriumsalz (Dowfax® 2A1 der Dow Chemicals) in Wasser

Emulgatorlösung 2: 30 gew.-%ige Lösung des Natriumsalzes eines Schwefelsäurehalbestergemisches von $C_{10}$-$C_{16}$-Alkyl-Ethoxylaten (mittlerer EO-Grad 30) in Wasser (Disponil® FES 77 der Henkel KGaA).

Dispersion 2 (Hydrophiles Polymer)

Nach der Herstellungsvorschrift für die Dispersion 1 wurde eine wässrige Dispersion 2 eines hydrophilen Polymers P1 hergestellt. Die eingesetzte Monomeremulsion wies folgende Zusammensetzung auf:

| | |
|---|---|
| 302 g | entionisiertem Wasser |
| 18 g | Emulgatorlösung 1 |
| 100 g | Emulgatorlösung 2 |
| 402 g | Methylmethacrylat |
| 366 g | n-Butylacrylat |
| 24 g | Methacrylsäure |
| 16 g | einer 50 gew.-%igen wässrigen Acrylamid-Lösung. |

Die erhaltene Dispersion war frei von Koagulat und wies einen Feststoffgehalt von 49 Gew.-% auf. Der

pH-Wert der Dispersion lag bei 8,0. Der gewichtsmittlere Teilchendurchmesser des Polymerisats lag bei 140 nm. Die Glasübergangstemperatur des Polymeren lag bei 29 °C.

Dispersion D3 (hydrophobes Polymer)

In einem Emulgiergefäß wurde eine wässrige Monomeremulsion aus:

| | |
|---|---|
| 342,2 g | entionisiertem Wasser |
| 7,8 g | Emulgatorlösung 1 |
| 175,0 g | tert.-Butylmethacrylat |
| 166,3 g | n-Butylacrylat und |
| 8,8 g | Acrylsäure hergestellt. |

In einen Reaktor legte man 235 g entionisiertes Wasser und 38,9 g Emulgatorlösung 1 vor und erwärmte auf 85 °C. Anschließend gab man 4,4 g wässrige Initiatorlösung in einer Portion zu. Danach gab man über getrennte Zuläufe die Monomeremulsion innerhalb von 2 Stunden und die verbleibende Initiatorlösung innerhalb 2,25 Stunden zu. Nach Beendigung der Initiatorzugabe behielt man die 85 °C 2 Stunden bei und kühlte dann auf Raumtemperatur. Die erhaltene Dispersion enthielt weniger als 1 g Koagulat und wies einen Feststoffgehalt von 33,6 Gew.-% auf. Der gewichtsmittlere Teilchendurchmesser des Polymerisats lag bei 80 nm. Die Glasübergangstemperatur des Polymeren lag bei 24 °C.

Initiatorlösung: 0,88 g Natriumperoxodisulfat
88,00 g entionisiertes Wasser

Dispersion 4 (Hydrophiles Polymer)

Nach der Herstellungsvorschrift für die Dispersion 3 wurde eine wässrige Dispersion 4 eines hydrophilen Polymers P1 hergestellt. Die eingesetzte Monomeremulsion wies folgende Zusammensetzung auf:

| | |
|---|---|
| 342,0 g | entionisiertem Wasser |
| 7,8 g | Emulgatorlösung 1 |
| 175,0 g | Methylmethacrylat |
| 166,3 g | n-Butylacrylat |
| 8,8 g | Acrylsäure. |

Die erhaltene Dispersion enthielt weniger als 1 g Koagulat und wies einen Feststoffgehalt von 34,6 Gew.-% auf. Der gewichtsmittlere Teilchendurchmesser des Polymerisats lag bei 72 nm. Die Glasübergangstemperatur des Polymeren war 22 °C.

III. Herstellung der erfindungsgemäßen Zubereitungen (Blends B1 bis B4, Vergleichblends VB1 bis VB3):

Aus den Dispersionen wurde durch Abmischen der Dispersionen D1 bis D4 in einem Becher folgende erfindungsgemäße Blends hergestellt:

| | |
|---|---|
| Blend B1 | 95 GT Dispersion 1 und 5 GT Dispersion 3 |
| Blend B2 | 90 GT Dispersion 1 und 10 GT Dispersion 3 |
| Blend B3 | 80 GT Dispersion 1 und 25 GT Dispersion 3 |
| Blend B4 | 90 GT Dispersion 2 und 10 GT Dispersion 3 |
| Blend VB1* | 90 GT Disoersion 1 und 10 GT Dispersion 4 |
| Blend VB2* | 90 GT Dispersion 2 und 10 GT Dispersion 4 |
| Blend VB3* | 80 GT Dispersion 2 und 10 GT Dispersion 4 |

GT = Gewichtsanteile
* nicht erfindungsgemäß

IV. Herstellung erfindungsgemäßer pigmenthaltiger Zubereitungen (als Dispersionsfarben F1 bis F4, Vergleichsbeispiele VF1 bis VF5):

Die Blends B1 bis B4, VB1 bis VB3 sowie die Dispersionen D1 und D2 wurden auf einen Feststoffgehalt von 47,5 Gew.-% eingestellt. Hieraus formulierte man Dispersionsfarben mit einer Pigmentvolumenkonzentration PVK* von 32. Zu diesem Zweck vermischte man in der angegebenenen Reihenfolge:

| | |
|---|---|
| 91,14 g | Wasser |
| 31,90 g | Propylenglykol |
| 1,37 g | Verdicker[1)] |
| 1,82 g | 2-Amino-2-methylpropanol mit 5 % Wasser |
| 1,82 g | Entschäumer[2)] |
| 2,73 g | Dispergiermittel[3)] |
| 1,82 g | handelsübliches Biozid[4)] |
| 3,00 g | wässrige Dispersion eines Assoziatiwerdickers [5)] |
| 105,07 g | Titandioxidpigment[6)] |
| 45,57 g | Pigment [7)] |
| 22,79 g | Feldspat [8)] |
| 70,00 g | Wasser |
| 10,94 g | Dipropylenglykolmono-n-butylether |
| 1,82 g | Entschäumer[2)] |
| 460,50 g | Polymerblend (47,5 gew.-%ig) |
| 10,94 g | 20 gew.-%ige wässrige Lösung eines Assoziativverdickers[9)] |
| 5,47 g | Fungizid [10)] und |
| 31,30 g | Wasser. |

1) Natrosol® Plus GR.331 der Hercules GmbH Düsseldorf,
2) Foammaster VL der Henkel KGaA
3) 30 gew.-%ige wässrige Lösung eines Ammoniumpolyacrylats; Pigmentverteiler MD20 der BASF AG, Ludwigshafen
4) Proxel®GXL der Zeneca GmbH, Frankfurt
5) Dispersion eines hydrophob modifizierten Polyetherurethans; Collacral PU 85 der BASF
6) Tiona RCL 535, Titandioxid-Pigment der Mellenium Inorg. Chemistry, Baltimore
7) Burgess® 28 der Burgess Pigment Co., Sandersville, Georgia
8) Minex® 4 der Unimin Speciality Minerals Inc. Elco/Illinois; Na/K-Alumosilikat, mittlere Korngröße 7,5 µm
9) 20 gew.-%ige Lösung eines assoziativ verdickenden Polyurethans, Acrysol RM 2020 der Rohm and Haas Deutschland GmbH, Frankfurt
10) Nuocid® 404 D, Fungizid der Hüls America Inc., Piscataway, New Jersey.

Die so erhaltenen Dispersionen wurden hinsichtlich ihrer Viskosität bei niedriger Schergeschwindigkeit (sog. Stormerviskosität) und bei hoher Schergeschwindigkeit (ICI-Viskosität) untersucht. Die Viskositätswerte der Farben (in Einheiten nach Krebs: KU = Krebs-Units, bzw. in P = Poise) sind in Tabelle 1 zusammengefasst.

**[0075]** * Unter der Pigmentvolumenkonzentration PVK versteht man das mit 100 multiplizierte Verhältnis von Pigmentvolumen zu Gesamtfeststoffvolumen (Pigment + Polymer).

Tabelle 1:

| Beispiel | Bindemittel | Stormer-Viskosität [KU][1)] | ICI-Viskosität [P][2)] |
|---|---|---|---|
| 1 | B1 | 104 | 0,80 |
| 2 | B2 | 107 | 0,80 |
| 3 | B3 | 100 | 0,80 |
| 4 | B4 | 102 | 0,73 |
| V1 | D1 | 81 | 0,55 |
| V2 | D2 | 73 | 0,53 |

1) Die Stormer Viskosität wurde nach ASTM D 562-81 bestimmt (KU = Krebs units).
2) Die ICI-Viskosität wurde nach ASTM D 4287-94 bestimmt (P = Poise).

Tabelle 1: (fortgesetzt)

| Beispiel | Bindemittel | Stormer-Viskosität [KU][1)] | ICI-Viskosität [P][2)] |
|---|---|---|---|
| V3 | VB1 | 88 | 0,68 |
| V4 | VB2 | 79 | 0,58 |
| V5 | VB3 | 80 | 0,58 |

1) Die Stormer Viskosität wurde nach ASTM D 562-81 bestimmt (KU = Krebs units).
2) Die ICI-Viskosität wurde nach ASTM D 4287-94 bestimmt (P = Poise).

**Patentansprüche**

**1.** Wässrige Zubereitungen, enthaltend:

i. wenigstens ein hydrophiles teilchenförmiges Polymer P1 als wässrige Dispersion, das aus ethylenisch ungesättigten Monomeren M aufgebaut ist, umfassend:

20 bis 100 Gew.-% wenigstens eines monoethylenisch ungesättigten Monomers M1 mit einer Wasserlöslichkeit im Bereich von 10 g/l bis 100 g/l (bei 25 °C und 1 bar),
0 bis 80 Gew.-% eines oder mehrerer monoethylenisch ungesättigter Monomere M2 mit einer Wasserlöslichkeit unterhalb 10 g/l (bei 25 °C und 1 bar), und
0 bis 20 Gew.-% eines oder mehrerer Monomere M3, die von den Monomeren M1 und M2 verschieden sind, und

ii. wenigstens ein hydrophobes, teilchenförmiges Polymer P2 als wässrige Dispersion, das aus ethylenisch ungesättigten Monomeren M' aufgebaut ist, umfassend:

0 bis 20 Gew.-% eines oder mehrerer monoethylenisch ungesättigter Monomere M1' mit einer Wasserlöslichkeit im Bereich von 10 g/l bis 100 g/l (bei 25 °C und 1 bar),
80 bis 100 Gew.-% wenigstens eines monoethylenisch ungesättigten Monomers M2' mit einer Wasserlöslichkeit unterhalb 10 g/l (bei 25 °C und 1 bar), und
0 bis 20 Gew.-% eines oder mehrerer Monomere M3', die von den Monomeren M1' und M2' verschieden sind, und

wobei die Glasübergangstemperatur $T_G1$ des Polymeren P1 von der Glasübergangstemperatur $T_G2$ des Polymeren P2 weniger als 10 K abweicht und wobei die Gewichtsanteile der Monomere M1, M2 und M3 sowie der Monomere M1', M2' und M3' sich jeweils zu 100 Gew.-% addieren.

**2.** Zubereitung nach Anspruch 1 wobei die Monomere M1 und M1' unabhängig voneinander ausgewählt sind unter Methylmethacrylat, Methylacrylat, Ethylacrylat, n- und iso-Propylacrylat, Vinylacetat, Acrylnitril, Methacrylnitril und N-Vinylcaprolactam.

**3.** Zubereitung nach Anspruch 1 oder 2 worin die Monomere M2 und M2' unabhängig voneinander ausgewählt sind unter $C_2$-$C_{18}$-Alkylmethacrylaten, $C_4$-$C_{18}$-Alkylacrylaten, vinylaromatischen Monomeren, $C_2$-$C_6$-Olefinen, konjugierten Dienen, Vinylchlorid und Vinylidenchlorid und den Vinylestern aliphatischer $C_3$-$C_{18}$-Carbonsäuren.

**4.** Zubereitung nach Anspruch 3, wobei das hydrophile Polymer P1 aufgebaut ist aus:

20 bis 80 Gew.-% Methylmethacrylat als Monomer M1,
20 bis 79,9 Gew.% wenigstens eines Monomers M2, ausgewählt unter den $C_4$-$C_8$-Alkylacrylaten, Styrol und $\alpha$-Methylstyrol, und
0,1 bis 10 Gew.-% wenigstens eines Monomers M3,

oder aus:

20 bis 90 Gew.-% Vinylacetat als Monomer M1,
10 bis 80 Gew.-% wenigstens eines Monomers M2, ausgewählt unter Ethylen, den Vinylestern aliphatischer

$C_3$-$C_{12}$-Carbonsäuren und den $C_4$-$C_8$-Alkylacrylaten, und
0 bis 10 Gew.-% eines oder mehrerer Monomere M3.

**5.** Zubereitung nach Anspruch 3 oder 4, wobei das hydrophobe Polymer P2 aufgebaut ist aus:

2 bis 19,9 Gew.-% Methylmethacrylat als Monomer M1',
80 bis 97,9 Gew.% wenigstens eines Monomers M2', ausgewählt unter den $C_4$-$C_8$-Alkylacrylaten, Styrol und $\alpha$-Methylstyrol, und
0,1 bis 10 Gew.-% wenigstens eines Monomers M3',

oder aus:

5 bis 20 Gew.-% Vinylacetat als Monomer M1',
80 bis 95 Gew.-% wenigstens eines Monomers M2', ausgewählt unter Ethylen, den Vinylestern aliphatischer $C_3$-$C_{12}$-Carbonsäuren und den $C_4$-$C_8$-Alkylacrylaten, und
0 bis 10 Gew.-% eines oder mehrerer Monomere M3',

oder aus:

90 bis 99,9 Gew.-% wenigstens zweier verschiedener Monomere M2', ausgewählt unter den $C_4$-$C_8$-Alkylacrylaten und den $C_2$-$C_8$-Alkylmethacrylaten, und
0,1 bis 10 Gew.-% wenigstens eines Monomers M3'.

**6.** Zubereitung nach einem der vorhergehenden Ansprüche, enthaltend zusätzlich zu den Polymeren P1 und P2 wenigstens ein verdickend wirkendes Polymer P3.

**7.** Zubereitung nach Anspruch 6, enthaltend 0,01 bis 5 Gew.-%, bezogen auf das Gesamtgewicht der Zubereitung, des verdickend wirkenden Polymers P3.

**8.** Zubereitung nach einem der vorhergehenden Ansprüche, wobei das hydrophobe teilchenförmige Polymer P2 einen gewichtsmittleren Teilchendurchmesser unterhalb 150 nm aufweist.

**9.** Zubereitung nach einem der vorhergehenden Ansprüche, wobei das Gewichtsverhältnis der Polymere P1 zu P2 im Bereich von 99:1 bis 1:1 liegt.

**10.** Zubereitung nach einem der vorhergehenden Ansprüche, enthaltend zusätzlich zu den Polymeren P1 und P2 wenigstens einen Feststoff in dispers verteilter Form, ausgewählt unter, organischen oder anorganischen Pigmenten, sowie organischen oder anorganischen Füllstoffen.

**11.** Verwendung der wässrigen Zubereitungen aus den Ansprüchen 1 bis 10 für die Beschichtung von Substraten.

## Claims

**1.** An aqueous formulation comprising:

i. at least one hydrophilic particulate polymer P1, as an aqueous dispersion, which is composed of ethylenically unsaturated monomers M comprising:

from 20 to 100% by weight of at least one monoethylenically unsaturated monomer M1 having a water-solubility in the range from 10 to 100 g/l (at 25°C and 1 bar),
from 0 to 80% by weight of one or more monoethylenically unsaturated monomers M2 having a water-solubility below 10 g/l (at 25°C and 1 bar), and
from 0 to 20% by weight of one or more monomers M3 which are different from the monomers M1 and M2, and

ii. at least one hydrophobic particulate polymer P2, as an aqueous dispersion, which is composed of ethylenically unsaturated monomers M' comprising:

from 0 to 20% by weight of one or more monoethylenically unsaturated monomers M1' having a water-solubility in the range from 10 to 100 g/l (at 25°C and 1 bar),
from 80 to 100% by weight of at least one monoethylenically unsaturated monomer M2' having a water-solubility below 10 g/l (at 25°C and 1 bar), and
from 0 to 20% by weight of one or more monomers M3' which are different from the monomers M1' and M2', and

where the glass transition temperature $T_g1$ of the polymer P1 is less than 10 K different from the glass transition temperature $T_g2$ of the polymer P2 and where the proportions by weight of the monomers M1, M2 and M3 and of the monomers M1', M2' and M3' respectively add up in each case to 100% by weight.

**2.** A formulation as claimed in claim 1 wherein the monomers M1 and M1' are selected independently of one another from methyl methacrylate, methyl acrylate, ethyl acrylate, n- and isopropyl acrylate, vinyl acetate, acrylonitrile, methacrylonitrile and N-vinylcaprolactam.

**3.** A formulation as claimed in claim 1 or 2 wherein the monomers M2 and M2' are selected independently of one another from $C_2$-$C_{18}$-alkyl methacrylates, $C_4$-$C_{18}$-alkyl acrylates, vinylaromatic monomers, $C_2$-$C_6$-olefins, conjugated dienes, vinyl chloride, vinylidene chloride and the vinyl esters of aliphatic $C_3$-$C_{18}$ carboxylic acids.

**4.** A formulation as claimed in claim 3 wherein the hydrophilic polymer P1 is composed of:

from 20 to 80% by weight of methyl methacrylate as monomer M1,
from 20 to 79.9% by weight, of at least one monomer M2 selected from $C_4$-$C_8$-alkyl acrylates, styrene and α-methyl-styrene, and
from 0.1 to 10% by weight of at least one monomer M3,

or of:

from 20 to 90% by weight of vinyl acetate as monomer M1,
from 10 to 80% by weight of at least one monomer M2 selected from ethylene, the vinyl esters of aliphatic $C_3$-$C_{12}$ carboxylic acids, and $C_4$-$C_8$-alkyl acrylates, and
from 0 to 10% by weight of one or more monomers M3.

**5.** A formulation as claimed in claim 3 or 4 wherein the hyrophobic polymer P2 is composed of:

from 2 to 19.9% by weight of methyl methacrylate as monomer M1',
from 80 to 97.9% by weight of at least one monomer M2' selected from $C_4$-$C_8$-alkyl acrylates, styrene and α-methylstyrene, and
from 0.1 to 10% by weight of at least one monomer M3',

or of:

from 5 to 20% by weight of vinyl acetate as monomer M1',
from 80 to 95% by weight of at least one monomer M2', selected from ethylene, the vinyl esters of aliphatic $C_3$-$C_{12}$ carboxylic acids, and $C_4$-$C_8$-alkyl acrylates, and
from 0 to 10% by weight of one or more monomers M3',

or of:

from 90 to 99.9% by weight of at least two different monomers M2', selected from $C_4$-$C_8$-alkyl acrylates and $C_2$-$C_8$-alkyl methacrylates, and
from 0.1 to 10% by weight of at least one monomer M3'.

**6.** A formulation as claimed in any of the preceding claims comprising in addition to the polymers P1 and P2, at least one thickening polymer P3.

**7.** A formulation as claimed in claim 6 comprising from 0.01 to 5% by weight, based on the overall weight of the formulation, of the thickening polymer P3.

8. A formulation as claimed in any of the preceding claims wherein the hydrophobic particulate polymer P2 has a weight-average particle diameter below 150 nm.

9. A formulation as claimed in any of the preceding claims wherein the weight ratio of the polymers P1 to P2 is from 99:1 to 1:1.

10. A formulation as claimed in any of the preceding claims comprising in addition to the polymers P1 and P2 at least one solid in disperse form selected from organic or inorganic pigments and organic or inorganic extenders.

11. The use of an aqueous formulation of any of claims 1 to 10 to coat substrates.

**Revendications**

1. Préparations aqueuses contenant :

i. au moins un polymère P1 hydrophile particulaire sous forme de dispersion aqueuse, qui est formé de monomères M à insaturation éthylénique, comprenant

20% à 100% en poids d'au moins un monomère M1 à insaturation monoéthylénique ayant une hydrosolubilité allant de 10 g/L à 100 g/L (à une température de 25°C et sous une pression de 1 bar),
0% à 80% en poids d'un ou de plusieurs monomères M2 à insaturation monoéthylénique ayant une hydrosolubilité inférieure à 10 g/L (à une température de 25°C et sous une pression de 1 bar), et
0% à 20% en poids d'un ou de plusieurs monomères M3 qui sont différents des monomères M1 et M2, et

ii. au moins un polymère P2 hydrophobe particulaire sous forme de dispersion aqueuse, qui est formé de monomères M' à insaturation éthylénique, comprenant

0% à 20% en poids d'un ou de plusieurs monomères M1' à insaturation monoéthylénique ayant une hydrosolubilité allant de 10 g/L à 100 g/L (à une température de 25°C et sous une pression de 1 bar),
80% à 100% en poids d'au moins un monomère M2' à insaturation monoéthylénique ayant une hydrosolubilité inférieure à 10 g/L (à une température de 25°C et sous une pression de 1 bar), et
0% à 20% en poids d'un ou de plusieurs monomères M3' qui sont différents des monomères M1' et M2', et

dans lesquelles la température de transition vitreuse $T_g1$ du polymère P1 diffère de la température de transition vitreuse $T_g2$ du polymère P2 de moins de 10 K et dans lesquelles les proportions en poids des monomères M1, M2 et M3 ainsi que des monomères M1', M2' et M3' s'ajoutent pour atteindre 100% en poids.

2. Préparation aqueuse selon la revendication 1, dans laquelle les monomères M1 et M1' sont choisis, indépendamment les uns des autres, parmi le méthacrylate de méthyle, l'acrylate de méthyle, l'acrylate d'éthyle, l'acrylate de n-propyle et l'acrylate d'iso-propyle, l'acétate de vinyle, l'acrylonitrile, le méthacrylonitrile et la N-vinylcaprolactame.

3. Préparation selon la revendication 1 ou 2, dans laquelle les monomères M2 et M2' sont choisis, indépendamment les uns des autres, parmi les méthacrylates d'alkyle en $C_2$ à $C_{18}$, les acrylates d'alkyle en $C_4$ à $C_{18}$, les monomères vinylaromatiques, les oléfines en $C_2$ à $C_6$, les diènes conjugués, le chlorure de vinyle et le chlorure de vinylidène et les esters vinyliques d'acides carboxyliques en $C_3$ à $C_{18}$ aliphatiques.

4. Préparation selon la revendication 3, dans laquelle le polymère P1 hydrophile est formé de :

20% à 80% en poids de méthacrylate de méthyle en tant que monomère M1,
20% à 79,9% en poids d'au moins un monomère M2, choisi parmi les acrylates d'alkyle en $C_4$ à $C_8$, le styrène et l'α-méthylstyrène, et
0,1% à 10% en poids d'au moins un monomère M3,

ou de :

20% à 90% en poids d'acétate de vinyle en tant que monomère M1,
10% à 80% en poids d'au moins un monomère M2, choisi parmi l'éthylène, les esters vinyliques d'acides

carboxyliques en $C_3$ à $C_{12}$ aliphatiques et les acrylates d'alkyle en $C_4$ à $C_8$, et
0% à 10% en poids d'un ou de plusieurs monomères M3.

**5.** Préparation selon la revendication 3 ou 4, dans laquelle le polymère P2 hydrophobe est formé de :

2% à 19,9% en poids de méthacrylate de méthyle en tant que monomère M1',
80% à 97,9% en poids d'au moins un monomère M2', choisi parmi les acrylates d'alkyle en $C_4$ à $C_8$, le styrène et l'α-méthylstyrène, et
0,1% à 10% en poids d'au moins un monomère M3',

ou de :

5% à 20% en poids d'acétate de vinyle en tant que monomère M1',
80% à 95% en poids d'au moins un monomère M2', choisi parmi l'éthylène, les esters vinyliques d'acides carboxyliques en $C_3$ à $C_{12}$ aliphatiques et les acrylates d'alkyle en $C_4$ à $C_8$, et
0% à 10% en poids d'un ou de plusieurs monomères M3',

ou de :

90% à 99,9% en poids d'au moins deux monomères M2' différents, choisis parmi les acrylates d'alkyle en $C_4$ à $C_8$ et les méthacrylates d'alkyle en $C_2$ à $C_8$, et
0,1% à 10% en poids d'au moins un monomère M3'.

**6.** Préparation selon l'une quelconque des revendications précédentes, contenant, en plus des polymères P1 et P2, au moins un polymère P3 à effet épaississant.

**7.** Préparation selon la revendication 6, contenant 0,01% à 5% en poids, par rapport au poids total de la préparation, du polymère P3 à effet épaississant.

**8.** Préparation selon l'une quelconque des revendications précédentes, dans laquelle le polymère P2 particulaire hydrophobe présente un diamètre des particules moyen en poids inférieur à 150 nm.

**9.** Préparation selon l'une quelconque des revendications précédentes, dans laquelle le rapport pondéral des polymères P1 à P2 va de 99:1 à 1:1.

**10.** Préparation selon l'une quelconque des revendications précédentes, contenant, en plus des polymères P1 et P2, au moins un solide sous forme dispersée, choisi parmi les pigments organiques ou inorganiques, ainsi que des charges organiques ou inorganiques.

**11.** Utilisation des préparations aqueuses des revendications 1 à 10 pour le revêtement de substrats.